Europäisches Patentamt

European Patent Office

Office européen des brevets

(19)

(11) Veröffentlichungsnummer: **0 186 838**
**B1**

(12) **EUROPÄISCHE PATENTSCHRIFT**

(45) Veröffentlichungstag der Patentschrift: **29.08.90**

(21) Anmeldenummer: **85115975.6**

(22) Anmeldetag: **14.12.85**

(51) Int. Cl.⁵: **B 23 B 31/40, B 23 B 31/30**

(54) Festspannvorrichtung für Werkstücke.

(30) Priorität: **21.12.84 DE 3446731**

(43) Veröffentlichungstag der Anmeldung:
**09.07.86 Patentblatt 86/28**

(45) Bekanntmachung des Hinweises auf die
Patenterteilung:
**29.08.90 Patentblatt 90/35**

(84) Benannte Vertragsstaaten:
**AT BE CH DE FR GB IT LI LU NL SE**

(56) Entgegenhaltungen:
**GB-A- 827 664
GB-A- 951 978
US-A-4 229 014
US-A-4 473 195**

(73) Patentinhaber: **Raaphorst geb. Klee, Gerhard
Jürgen
Hauptstrasse 118a
D-5830 Schwelm (DE)**
(73) Patentinhaber: **Tenzer, Hans-Werner
Flurstrasse 18
D-5830 Schwelm (DE)**

(72) Erfinder: **Raaphorst geb. Klee, Gerhard Jürgen
Hauptstrasse 118a
D-5830 Schwelm (DE)**
Erfinder: **Tenzer, Hans-Werner
Flurstrasse 18
D-5830 Schwelm (DE)**

(74) Vertreter: **Peerbooms, Rudolf, Dipl.-Phys.
Postfach 200 208 Dickmannstrasse 45c
D-5600 Wuppertal 2 (DE)**

Courier Press, Leamington Spa, England.

**Beschreibung**

Die Erfindung betrifft eine Festspannvorrichtung für mit einer durchgehenden Innenbohrung versehene Werkstücke, insbesondere bei computergesteuerten Werkzeugmaschinen für spanabhebende Bearbeitung, mit einer zentralen, in die Innenbohrung des Werkstückes einführbaren Welle, an deren Umfang mindestens zwei, in radialen Ausnehmungen der Welle aufgenommene Spannstücke angeordnet sind, die jeweils mit druckmittelbeaufschlagten Kolben zur Radialspreizung der Spannstücke fest verbunden sind.

Werkstücke mit durchgehender Innenbohrung müssen für eine Bearbeitung auf Werkzeugmaschinen, beispielsweise Drehmaschinen, sehr genau und stabil eingespannt werden. Hier ist es allgemein üblich, die Werkstücke lediglich an den Enden einzuspannen, wobei am antriebsseitigen Ende ein Innenspannfutter und am gegenüberliegenden Ende ein Innenspanndorn vorgesehen sind. Diese bekannten Festspanvorrichtungen haben den großen Nachteil, daß lediglich ein einziges Werkstück einspannbar ist, wodurch die Möglichkeit computergesteuerter Werkzeugmaschinen zur Bearbeitung mehrerer Werkstücke nicht genutzt werden kann. Längere Werkstücke mit Innenbohrung besitzen im übrigen häufig eine zu geringe Eigenfestigkeit, so daß das Werkstück dem Andruck des bearbeitenden Werkzeugs ausweicht oder sich unter seinem Eigengewicht durchbiegt und somit eine genaue Bearbeitung nicht möglich ist.

Durch die den nächstkommenden Stand der Technik beschreibende GB—A—951 978 ist eine Festspannvorrichtung für rohrförmige Werkstücke bekannt, die eine in die Innenbohrung des Werkstückes einführbare Welle aufweist, an deren Umfang eine Vielzahl von stößelartigen Spannstücken in radialen Ausnehmungen der Welle angeordnet sind. Jedes Spannstück ist mit einem Druckmittelkolben verbunden, und durch gemeinsame Druckbeaufschlagung aller Kolben werden die Spannstücke gegen die Innenwandung des Werkstückes auseinander gespreizt. Bei der bekannten Vorrichtung sind die Spannstücke nur über ihre hinteren Kolben in den Ausnehmungen geführt, weshalb sie in Umfangsrichtung nur geringe Kräfte verformungsfrei auffangen können. Zudem kann die nur punktförmige Berührung der stößelartigen Spannstücke zu einer Überbeanspruchung der Eigenfetigkeit der Werkstücke führen. Ferner ist die bekannte Vorrichtung nur für Werkstücke eines engen Innendurchmesserbereiches geeignet.

Der Erfindung liegt die Aufgabe zugrunde, eine gattungsgemäße Festspannvorrichtung zu schaffen, welche eine auch gegenüber in Umfangsrichtung wirkenden Kräften stabile und genaue Einspannung gestattet, welche für Werkstücke eines weiten Innendurchmesserbereiches einsetzbr ist und mit welcher auch Werkstücke geringer Eigenfestigkeit aufspannbar sind.

Diese Aufgabe ist erfindungsgemäß dadurch gelöst, daß die Spannstücke als längliche Leisten mit rechteckigem Querschnitt ausgebildet und paßfederartig in Längsnuten der Welle angeordnet sind, daß den Spannstücken von den Kolben getrennte Anschläge zur Begrenzung der Radialspreizung zugeordnet sind, daß den Spannstücken ringsegmentförmige Führungsstücke zugeordnet sind, dern Zahl gleich der Zahl der Spannstücke ist und die jeweils zwischen zwei benachbarten Spannstücken bündig eingefügt un dan der Umfangsfläche der Welle lösbar befestigbar sind, und daß die Führungsstücke auf ihrer Innenfläche Paßvorsprünge aufweisen, denen auf der Welle Paßausnehmungen zugeordnet sind, und daß die Welle auf Ihrer Länge mindestens zwei voneinander getrennte, jeweils eine radiale Gruppe von Spann- und ggfs. Führungsstücken aufweisende Spannbereiche besitzt, zwischen denen ein Wellenstützlager angeordnet ist, wobei die Kolben am Nutgrund angeordnet sind.

Durch die Erfindung wird eine Reihe von Vorteilen erreicht. Da sich die leistenförmigen Spannstücke über die gesamte Länge der Innenbohrung erstrecken, wird auch bei Körpern mit geringer Eigenfestigkeit eine gute Abstützung erreicht, wodurch auch in diesen Fällen eine einwandfreie Bearbeitung möglich ist. Aufgrund einer hydraulischen oder auch pneumatischen Beaufschlagung der Spannstücke sind hohe Spannkräfte erzielbar. Die Spannkräfte sind aber auch ggfs. fein dosierbar und auf niedrige Werte einstellbar, was für Werkstücke mit geringer Eigenfestigkeit von Bedeutung ist. Die im Querschnitt rechteckigen Spannstücke sind in Querrichtung auf ihrer gesamten Länge an den Seitenwänden der Nuten abgestützt und erhalten durch die Führungsstücke noch eine zusätzliche Querstabilität. Dadurch kann die Festspannvorrichtung auch bei weit ausgefahrenen Spannstücken hohe Torsionskräfte aufnehmen. Da nicht die gesamten Spannleisten, sondern lediglich lokal begrenzte Kolben mit dem Druckmittel beaufschlagt werden, ergeben sich auch bei hohen Drücken keinerlei Abdichtprobleme. Die Anordnung von Begrenzungsanschlägen ist vor allem bei einer sehr hohen Druckbeaufschlagung der Kolben im Hinblick auf die Unfallgefahr von großer Bedeutung, wobei die von den Kolben getrennte Anordnung der Anschläge eine sehr bequeme Fertigung der Spannstücke erlaubt. Durch die Führungsstücke wird der radiale Spreizbereich der Festspannvorrichtung erheblich erweitert, da nunmehr auch bei weit ausgefahrenen Spannstücken eine solide Querabstützung gewährleistet ist. Im Falle von Werkstücken mit einer Innenbohrung geringeren Durchmessers könen dann die Führungsstücke bei Bedarf wieder von der Welle gelöst werden.

Durch die Anordnung von Wellenstützlagern kann die Welle eine sehr große Länge aufweisen, ohne daß sie nach der Festspannung mehrerer Werkstücke durchhängt. Von daher ist auch bei einer Bearbeitung einer Vielzahl von Werkstücken hintereinander stets eine hohe Fertigungsgenauigkeit gewährleistet.

Nach einer vorteilhaften Ausgestaltung der Erfindung können in den Führungsstücken zwei gegensinnig von Strom durchflossene, jeweils neben den Spannstücken verlaufende elektrische Leiter integriert sein, deren Magnetfelder auf die Spannstücke unter Druckentlastung der Führungsflächen der Führungsstücke einwirken.

Weitere vorteilhafte Merkmale der Erfindung sind in den Ansprüchen 2 bis 11 angegeben.

Die Erfindung wird im folgenden anhand der Zeichnung näher erläutert. Es zeigen:

Fig. 1 eine Festspannvorrichtung mit einem Spannbereich, auf welchem zwei Werkstücke hintereinander aufgespannt sind,

Fig. 2 die Festspannvorrichtung gemäß einer Blickrichtung II in Fig. 1, teilweise in einer geschnittenen Darstellung, ohne aufgespannte Werkstücke,

Fig. 3 die Festspannvorrichtung gemäß einem Schnitt III—III in Fig. 2,

Fig. 4 eine alternative Ausführungtsform einer Festspannvorrichtung in einer analogen Darstellung zu Fig. 3,

Fig. 5 eine weitere Ausführungsform einer Festspannvorrichtung in einer analogen Darstellung zu Fig. 3,

Fig. 6 eine abgewandelte Ausführungsform eines Spannstückes der Festspannvorrichtung in Seitenansicht,

Fig. 7 eine Festspannvorrichtung mit zwei voneinander getrennten Spannbereichen und zusätzlichen Führungsstücken,

Fig. 8 die Festspannvorrichtung gemäß einer Blickrichtung VIII—VIII in Fig. 7 zur Hälfte in geschnittener Darstellung,

Fig. 9 die Festspannvorrichtung mit einer Gruppe von Spannstücken und Führungsstücken größerer radialer Erstreckung,

Fig. 10 eine weitere Ausführungsform eines Führungsstückes in Stirnansicht,

Fig. 11 das Führungsstück gemäß einer Blickrichtung XI in Fig. 10,

Fig. 12 das Führungsstück gemäß einem Scnitt XII—XII in Fig. 11,

Fig. 13 eine alternative Ausführungsform einer Festspanvorrichtung in einer analogen Darstellung zu Fig. 8,

Fig. 14 eine schematische Darstellung einer Festspannvorrichtung mit zwei Spannbereichen und einem dazwischen liegenden Wellenstützlager,

Fig. 15 das Wellenstützlager gemäß einem Schnitt XV—XV in Fig. 14,

Fig. 16 das Wellenstützlager mit zurückgezogener oberer Lagerhälfte,

Fig. 17 eine Festspannvorrichtung mit drei voneinander getrennten Spannbereichen und dazwischen angeordneten Wellenstützlagern,

Fig. 18 ein Wellenstützlager mit geradlinig zurückziehbarer oberer und unterer Lagerhälfte,

Fig. 19 eine weitere Ausführungsform einer Festspannvorrichtung und

Fig. 20 zwei elektrische Leiter mit dem Verlauf der magnetischen Feldlinien in ener Querschnittsdarstellung.

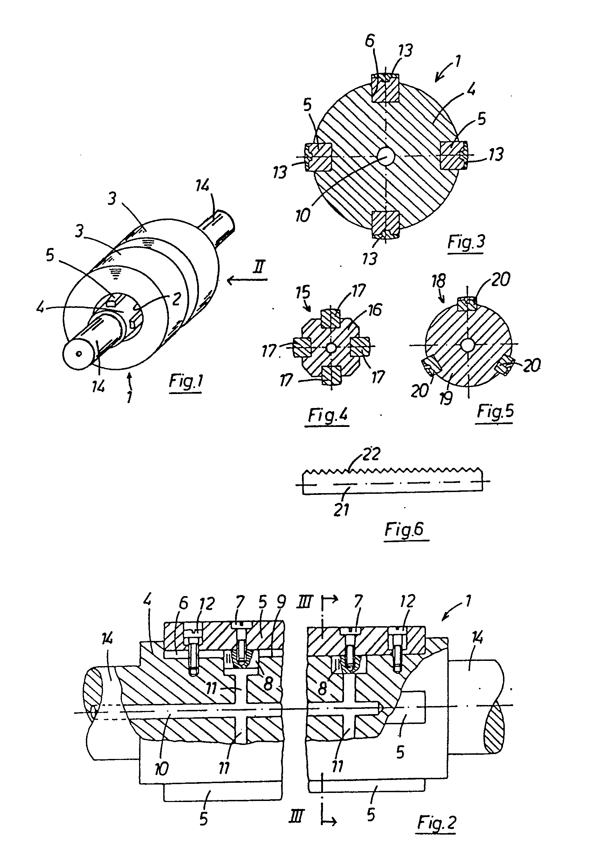

Die Fig. 1 bis 3 veranschaulichen den Aufbau einer Festspannvorrichtung 1 für mit einer durchgehenden Innenbohrung 2 versehene Werkstücke 3. Sie besteht aus einer zentralen, in die Innenbohrung 2 einführbaren Welle 4, an deren Umfang vier in Längsrichtung der Welle 4 orientierte Spannstücke 5 angeordnet sind. Die Spannstücke 5 sind paßfederartig in Längsnuten 6 der Welle 4 in radialer Richtung verschiebbar geführt. Miut den Spannstücken sind über Schrauben 7 zwei Kolben 8 fest verbunden, welche am Nutgrund 9 angeornet sind und welche pneumatisch oder vorzugsweise hydraulisch beaufschlagbar sind. Die Druckmittelbeaufschlagung erfolgt dabei über eine zentrale Wellenbohrung 10 mit zu den Kolben 8 führenden Zweigleitungen 11. In Fig. 2 sind die Spannstücke 5 auf der rechten Seite in eingezogener, auf der linken Seite in auseinander gespreizter Stellung gezeigt.

Den Spannstücken 5 sind weiterhin von den Kolben 8 getrennte Anschläge 12 zugeordnet. Diese sind in dem Ausführungsbeispiel nach Fig. 2 als im Nutgrund 9 befestigte Schrauben ausgebildet, deren Köpfe im erweiterten Teil von abgestuften Radialbohrungen der Spannstücke 5 geführt sind.

Aufgrund der festen Verbindung zwischen Kolben 8 und Spannstücken 5 können die Spannstücke auch durch Unterdruck wieder in die Nuten 9 automatisch zurückgezogen werden. In der Darstellung nach Fig. 3 sind die Spannstücke 5, die vorteilhafterweise aus Stahl gefertigt sind, mit einer weicheren Auflage 13 aus Kunststoff, Gummi oder Weichmetall versehen, so daß in jedem Fall eine Beschädigung der aufgespannten Werkstücke 3 ausgeschlossen ist. In den Fig. 1 und 2 sind schließlich noch Lagerenden 14 der Festspannvorrichtung 1 gezeigt, welche als an der Welle 4 angeformte, abgestufte Wellenabschnitte ausgeführt sind.

Fig. 4 zeigt eine weitere Ausführungsform eine Festspannvorrichtung 15, bei welcher anstelle einer zylindrischen Ausführung eine Merhrkantwelle 16 mit vier über den Umfang verteilten Spannstücken 17 vorgesehen ist. Gemäß Fig. 5 kan eine Festspannvorrichtung 18 schließlich auch aus einer zentralen Welle 19 mit lediglich drei über den Umfang verteilten Spannstücken 20 bestehen. Fig. 6 zeigt schließlich eine alternative Ausführungsform eines Spannstücks 21 mit einer gezackten, rändelähnlichen Spannfläche 22 zur abrutschsicheren Einspannung eines Werkstücks 3. Im Bedarfsfall ist ein Spannstück 5 mit glatter Spannfläche mit nur geringem Aufwand gegen ein Spannstück 21 auswechselbar.

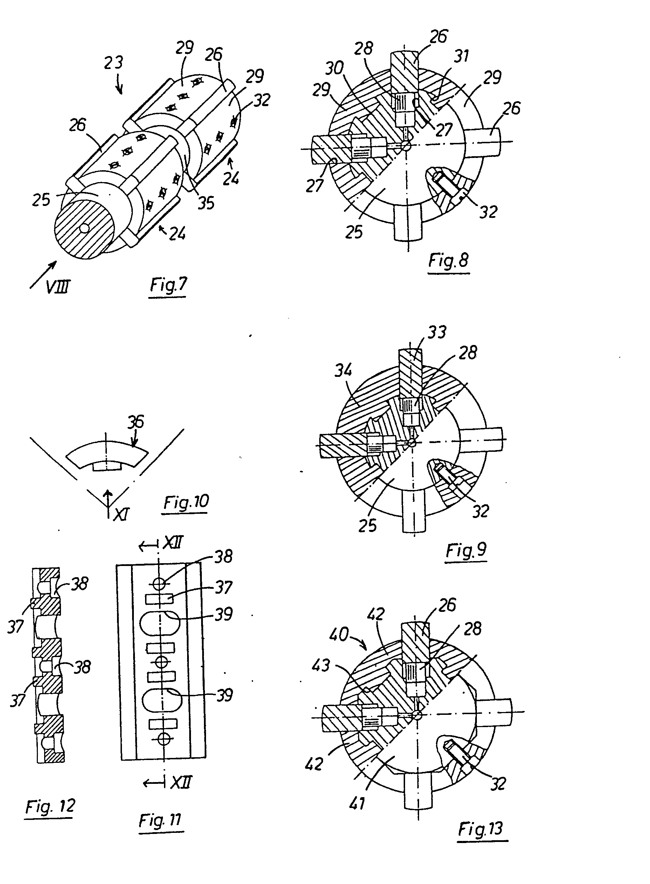

Fig. 7 veranschaulicht den Aufbau eine Festspannvorrichtung 23 mit zwei voneinander getrennten Spannbereichen 24. Einer zentralen Welle 25 sind dabei zwei Gruppen von jeweils vier Spannstücken 26 zugeordnet, die entsprechend Fig. 8 in Längsnuten 27 der Welle 25 geführt und mit Kolben 28 fest verbunden sind. Zur Erweiterung des radialen Spreizbereichs der Spannstücke 26 sind an der Umfangsfläche der Welle 25 zusätzlich ringsegmentförmige Führungsstücke 29 lösbar befestigt, die die weit auseinandergespreizten Spannstücke 26 seitlich abstützen. Die Führungsstücke 29 sind als Auschnitte eines Hohlzylinbdermantels ausgebildet und damit der zylindrischen Außenfläche der Welle 25 angepaßt. Sie besitzen weiterhin auf ihrer Innenfläche Paßvorsprünge 30, denen auf der Welle Paßausnehmungen 31 zugeordnet sind, so daß stets eine sehr genaue Führung der Spannstücke 26 gewährleistet ist. Zur Befestigung der Führungsstücke 29 sind jeweils mehrere Schrauben 32 vorgesehen.

Entsprechend Fig. 9 können an der zentralen Welle 25 auch in radialer Richtung größere Spannstücke 33 und Führungsstücke 34 für einen größeren radialen Spreizbereich befestigt werden. Da somit die Aufspannung von sehr schweren Werkstücken möglich ist, befindet sich zwischen den beinde Spannbereichen 24 der Festspannvorrichtung 23 ein glatter, längsnutenfreier Abschnitt 35 der zentralen Welle 25, an welchem die Welle 25 durch ein Stützlager zusätzlich geführt werden kann.

Die Fig. 10 bis 12 zeigen eine alternative Ausführungsform eines Führungsstücks 36, welches als Ausschnitt eines Zylinderhohlmantels ausgebildet ist und welches Paßvorsprünge 37 sowie Anschraublöcher 38 aufweist. Das Führungsstück 36 ist somit weitgehend identisch mit dem Führungsstück 29, besitzt jedoch zusätzlich Gewichtsreduzierausnehmungen 39, was im Hinblick auf die Fliehkraftbelastung bei hohen Arbeitsdrehzahlen von Drehmaschinen von Bedeutung ist.

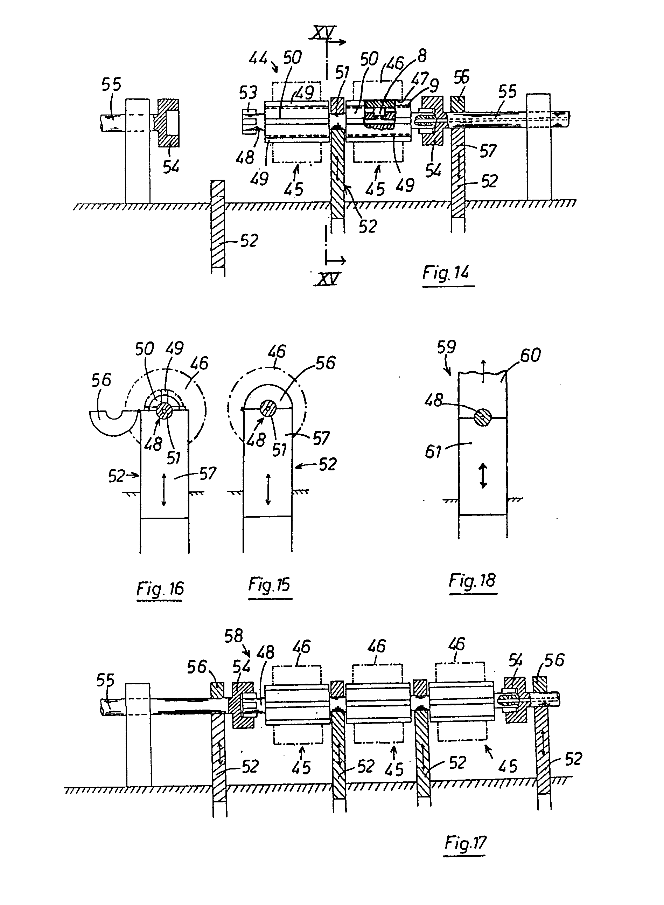

Fig. 13 zeigt eine Festspannvorrichtung 40 mit einer als Mehrkantprofil ausgebildeten Welle 41, an deren Umfangsfläche analog zu Fig. 8 Spannstücke 26 mit Kolben 28 angeordnet sind. Der Festspannvorrichtung 40 sind Führungsstücke 42 mit einer dem Wellenprofil angepaßten, mehrkantigen Innenfläche 43 zugeordnet. Die Herstellung der Festspannvorrichtung 40 ist etwas aufwendiger als beim Ausführungsbeispiel nach den Fig. 7 bis 9; doch ergibt sich durch die Mehrkantprofilform ein verbesserter Halt der Führungsstücke 42 an der zentralen Welle 41.

Die Fig. 14 bis 16 veranschaulichen in schematischer Form den Aufbau einer Festspannvorrichtung 44 mti zwei voneinander getrennten Spannbereichen 45 für strichpunktiert angedeutete Werkstücke 46 mit Innenbohrung 47. Die Festspannvorrichtung 44 umfaßt eine zentrale Welle 48, auf deren Umfang über die Breite der Spannbereiche 45 reichende Spannstücke 49 verteilt sind. Die Spannstücke 49 sind in Umfangsrichtung zusätzlich durch Führungsstücke 50 abgestützt und geführt. Zwischen den beiden Spannbereichen 45 besitzt die zentrale Welle 48 einen glatten Abschnitt 51, an welchem sie durch ein Wellenstützlager 52 geführt ist.

Die Welle 48 ist an ihren Enden mit den Spannstücken 49 ähnlichen, gesonderten Spreizstücken 53 versehen, denen maschinenseitig einseitig offene Hohlzylinder-Kupplungen 54 zugeordnet sind. Beide Hohlzylinder-Kupplungen 54 sind in Achsrichtung um die Länge eines Spannbereichs 45 zurückziehbar, so daß die Werkstücke 46 in bequemer Weise aufgespannt werden können.

Durch Zusammenfahren der Kupplungen 54 und ein Auseinanderspreizen der Spreizstücke 53 kann dann sofort wieder eine Drehverbindung zum Maschinenantrieb hergeselt werden. Durch eine genaue Einstellung des Drucks, mit dem die Spreizstücke 53 beaufschlagt werden, kann im übrigen das maximal von der Kupplung 54 auf die Welle 48 übertragbare Drehmoment eingestellt werden. Bei Überschreiten diesers zulässigen Drehmoments rutscht dann die Kupplung 54 durch, und es kan nicht zu einem Torsionsbruch der Welle 48 kommen. Um eine zu starke Torsionsverformung der Welle 48 zu verhindern, ist es von großem Vorteil, wenn die Welle 48 an beiden Enden mit synchroner Drehzahl angetrieben ist.

Um einerseits die Werkstücke 46 bequem festspannen und andererseits eine hohe Fertigungsgenauigkeit ereichen zu können, sind die Kupplungswellen 55 im zusammengefahrenen Zustand unmittelbar durch weitere Wellenstützlager 52 abgestützt. Wie aus den Fig. 15 und 16 häher hervorgeht, sind die Wellenstützlager 52 aus einer oberen Lagerhälfte 56 und einer unteren Lagerhälfte 57 aufgebaut. Die obere Lagerhälfte 56 ist von der Kupplungswelle 55 wegklappbar, die untere Lagerhälfte 57 ist im Maschinenfundament versenkbar. Auf diese Weise können die Wellenstützlager 52 vollkommen aus dem Bereich der Kupplungswelle 55 entfernt werden und die Kupplungen 54 frei zurückgezogen werden.

Wie in Fig. 14 gezeigt, wird beim Aufspannen eines Werkstücks 46 zunächst nur eine Kupplung 54 zurückgezogen, ein Werkstück 46 auf den nunmehr freien Spannbereich 45 aufgeschoben und anschließend die Kupplung 54 wieder angesetzt. In gleicher Weise wird mit dem zweiten Spannbereich 45 verfahren. Es ist aber auch vorteilhaft, das zwischen den beiden Spannbereichen 45 angeordnete Stützlager 52 vollkommen zurückziehbar auszugestalten, um bei beidendig angeschlossenen Kupplungen 54 ein Werkstück 46 von einem Spannbereich 45 auf den benachbarten, freien Spannbereich 45 herüberschieben zu können. Anstelle eines einzelnen Werkstückes 46 kann auch eine Gruppe von Werkstücken gleichen Innendurchmessers in einem der Spannbereiche 45 aufgespannt werden.

Solche zurückziehbaren Wellenstützlager zwischen den Spannbereichen 45 werden in jedem Fall bei einer Festspannvorrichtung 58 gemäß Fig. 17 erforderlich, welche drei oder mehr Spannbereiche 45 aufweist. Die Werkstücke werden hier zunächst auf die endseitigen Spannbereiche 45 aufgeschoben. Nach dem Zusammenfahren der Kupplungen 54 kann dann eines der Werkstücke 46 durch Zurückziehen des benachbarten Wellenstützlagers 52 zum zentralen Spannbereich 45 transportiert werden. Das zurückgezogene Wellenstützlager 52 wird danach wieder an der Welle 48 angelegt, wonach der frei gewordene äußere Spannbereich 45 beladen werden kann. Sind alle Werkstücke 46 aufgespannt, können beide Kupplungen 54 mit synchroner Drehzahl angetrieben werden.

Fig. 18 zeigt eine alternative Ausführungsform eines Wellenstützlagers 59 mit einer oberen Lagerhälfte 60 und einer unteren Lagerhälfte 61, zwischen denen die Welle 48 gelagert werden kann. Die beiden Lagerhälften 60, 61 sind entsprechend den eingezeichneten Pfeilen nach oben bzw. unten von der Welle 48 zurückziehbar. Aufgrund der einfachen Bewegungsführung eignet sich diese Lagertyp in besonderer Weise für eine automatische Betätigung und ist infolgedessen zur Vereinfachung des Arbeitsablaufes bei computergesteuerten Werkzeugmaschinen eisetzbar, bei denen zugleich Programme für die Bewegungsabläufe bei den Kupplungswellen 55 und den Wellenstützlagern 52 vorgegeben werden können.

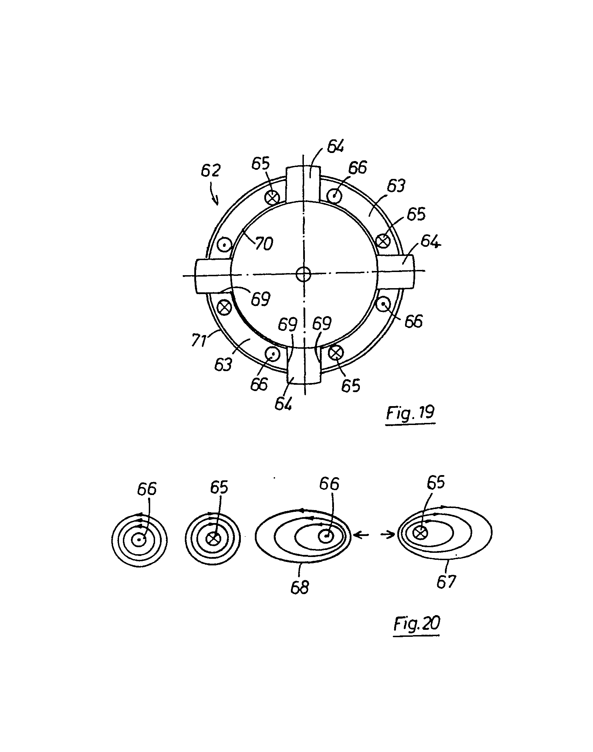

Die Fig. 19 und 20 veranschaulichen ein weiteres Ausführungsbeispiel der Festspannvorrichtung 62, bei welcher in den Führungsstücken 63 zwei gegensinnig von Strom durchflossene, jeweils neben den Spannstücken 64 verlaufende elektrische Leiter 65, 66 oder Wicklungen integriert sind, deren Magnetfelder 67, 68 auf die Spannstücke 64 unter Druckentlastung der Führungsflächen 69 der Führungsstücke 63 einwirken.

Die magnetischen Felder 67, 68 dienen zur Kompensation der Verdrehungskräfte, die auf die Spannstücke 64 einwirken. Bedingt durch Werkstückungenauigkeiten in den Maßen, z. B. bei Gußteilen, kann es auf der Festspannvorrichtung 62 während einer Rotationsbewegung unter Berücksichtigung des gegen die Drehrichtung arbeitenden Zerspanungswerkzeuges zu Kräfteverschiebungen kommen. Beim Ausführungsbeispiel sind vier, mit integrierten Leitern 65, 66 versehene Spannstücke 64 vorgesehen. Die Magnetfelder 67, 68 sind an den Gleitflächen der Führungstücke 63 gegeneinander abweisend, d. h. sie bewirken eine Stabilisierung und Festigung der Spannstücke 64. Im ausgefahrenen und unter Druck stehendem Zustand der Spannstücke 64 werden die Magnetfelder 67, 68 aufgebaut, und sie erreichen durch zunehmende Spannungszufuhr diesen Stabilisierungseffekt und damit eine Entlastung der Führungsflächen 69. Die Spannungszufuhr soll ihre größte Wirkung erreichen, sobald die Zerspanung der zu bearbeitenden Werkstücke beginnt. Zu einer magnetischen Aufladung der zu bearbeitenden Werkstücke kann es aufgrund der gegensinnig durch Strom durchflosenen Leitehr nicht komm. Die Führungsstücke 63 sind an der inneren und äußeren Mantelfläche mit einer magnetischen Abschirmung 70, 71 versehen, um eine unerwünschte Streuung der Magnetfelder zu verhindern.

**Patentansprüche**

1. Festspannvorrichtung für mit einer durchgehenden Innenbohrung (2) versehene Werkstücke (3), insbesondere bei computergesteuerten Werkzeugmaschinen für spanabhebende Bearbeitung, mit einer zentralen, in die Innenbohrung (2) des Werkstückes einführbaren Welle (24), an deren Umfang mindestens zwei, in radialen Ausnehmungen der Welle (25) aufgenommene Spannstücke (267) angeordnet sind, die jeweils mit druckmittelbeaufschlageten Kolben (28) zur Radialpreizung der Spannstücke (26) fest verbunden sind, dadurch gekennzeichnet, daß die Spannstücke (26) als längliche Leisten mit rechteckigem Querschnitt ausgebildet und paßfederartig in Längsnuten (27) der Welle (25) angeordnet sind, daß den Spannstücken (26) von den Kolben (8, 28) getrennte Anschläge (12) zur Begrenzung der Radialspreizung zugeordnet sind, daß den Spannstücken (26) ringsegmentförmige Führungsstücke (29) zugeordnet sind, deren Zahl gleich der Zahl der Spannstücke (26) ist und die jeweils zwischen zwei benachbarten Spannstücken (26) bündig eingefügt und an der Umfangsfläche der Welle (25) lösbar befestigbar sind, und daß die Führungsstücke (29) auf ihrer Innenfläche Paßvorsprünge (30) aufweisen, denen auf der Welle (25) Paßausnehmungen (31) zugeordnet sind, und daß die Welle (48) auf ihrer Länge mindestens zwei voneinander getrennte, jeweils eine radiale Gruppe von Spann- und ggfs. Führungsstücken (49, 50) aufweisende Spannbereiche (45) besitzt, zwischen denen ein Wellenstützlager (52) angeordnet ist wobei die kolben am Nutgrund angeordnet sind.

2. Festspannvorrichtung nach Anspruch 1, dadurch gekennzeichnet, daß der Welle (25) mehrere Gruppen von gegeneinander auswechselbaren Spannstücken (26, 33) und Führungsstücken (29, 34) verschiedener Größe zugeordnet sind.

3. Festspannvorrichtung nach Anspruch 1 oder 2, dadurch gekennzeichnet, daß die Welle (25) zylindrisch und die Führungsstücke (29) als Ausschnitte eine Hohlzylindermantels ausgebildet sind.

4. Festspannvorrichtung nach Anspruch 1 oder 2, dadurch gekennzeichnet, daß die Welle (41) als Mehrkantprofil ausgebildet ist und daß die Führungsstücke (42) mit einer dem Wellenprofil angepaßten, mehrkantigen Innenfläche (43) versehen sind.

5. Festspannvorrichtung nach einem der Ansprüche 1 bis 4, dadurch gekennzeichnet, daß die Führungsstücke (36) Gewichtsreduzierausnehmungen (39) aufweisen.

6. Festspannvorrichtung nach Anspruch 5, dadurch gekennzeichnet, daß das Wellenstützlager (52, 59) aus einer oberen (56, 60) und einer untren Lagerhälfte (57, 61) aufgebaut ist, die von der Welle (48) zurückziehbar sind.

7. Festspannvorrichtung nach einem der Ansprüche 1 bis 6, dadurch gekennzeichnet, daß die Welle (48) an ihren Enden mit den Spannstücken (49) ähnlichen, gesonderten Spreizstücken (53) versehen ist, denen maschineneseitig einseitig offene Hohlzylinder-Kupplungen (54) zugeordnet sind.

8. Festspannvorrichtung nach Anspruch 7, dadurch gekennzeichnet, daß mindestens eine der Hohlzylinder-Kupplungen (54) in Achsrichtung um die Länge eines Spannbereiches (45) zurückziehbar ist.

9. Festspannvorrichtung nach einem der Ansprüche 1 bis 6, dadurch gekennzeichnet, daß die Welle (48) an beiden Enden mit synchroner Drehzahl angetrieben ist.

10. Festspannvorrichtung nach Anspruch 1, dadurch gekennzeichnet, daß jedem Spannstück (5) mindestens zwei Kolben (8) zugeordnet sind.

11. Festspannvorrichtung nach einem oder mehreren der Ansprüche 1 bis 10, dadurch gekennzeichnet, daß in die Segmente der Welle (25) oder in den Führungsstücken (63) zwei gegensinnig von Strom durchflossene, jeweils neben den Spannstücken (26, 24) verlaufende elektrische Leiter (65, 66) integriert sind, deren Magnetfelder (67, 68) auf die Spannstücke (64) unter Druckentlastung der Führungsflächen (69) der Welle (25), bzw. der Führungsflächen der Führungsstücke (63), einwirken.

## Revendications

1. Dispositif de fixation de pièces à travailler (3) traversées par un trou (2), en particulier sur des machines-outils travaillant par enlèvement de matière commandées par ordinateur, comportant un arbre central (25) pouvant être introduit dans le trou (2) et sur le pourtour duquel sont placées au mons deux pièces de serrage (26) logées dans des évidements radiaux de l'arbre (25) à chacune desquelles sont fixés des pistons actionnés par fluide sous pression (28) pour l'écartement radial des pièces de serrage (26), caractérisé par le fait que les pièces de serrage (26) sont constituées de barrettes de section rectangulaire et sont placées à la manière de clavettes parallèles dans des rainure longitudinales (27) de l'arbre (25), qu'aux pièces de serrage (26) son adjointes des butées (12) séparées des pistons (8, 28) pour la limitation de l'écartement radial, qu'aux pièces de serrage (26) sont adjointes des pièces de guidage en forme de segment de couronne (29) dont le nombre est égal au nombre des pièces de serrage (26) et qui sont insérées à fleur chacune entre deux pièces de serrage (26) voisines et peuvent être fixées de manière amovible à la surface périphérique de l'arbre (25), et que ces pièces de guidage (29) présentent sur leur face intérieure des saillies d'ajustement (30) auxquelles sont associées sur l'arbre (25) des évidements d'ajustement (31), et que l'arbre (48) a sur sa longueur au moins deux zones de serrage (45) séparaées présentant chacune un groupe radial de pièces de serrage (49) et éventuellement de pièces de guidage (50) et entre lesquelles est placé un palier de support d'arbre (52), les pistons étant placés au fond de la rainure.

2. Dispositif de fixation selon la revendication 1, caractérisé par le fait qu'à l'arbre (25) sont associés plusieurs groupes de pièces de serrage (26, 33) et de pièces de guidage (29, 34) interchangeables de différentes dimensions.

3. Dispositif de fixation selon l'une des revendications 1 et 2, caractérisé par le fait que l'arbre (25) es cylindrique et les pièces de guidage (29) sont constituées de secteurs d'un cylindre creux.

4. Dispositif de fixation selon l'une des revendications 1 et 2, caractérisé par le fait que l'arbre (41) est de profil polygonal et les pièces de guidage (42) ont une face intérieure (43) de profil polygonal adapté au profil de l'arbre.

5. Dispositif de fixation selon l'une des revendications 1 à 4, caractérisé par le fait que les pièces de guidage (36) présentent des évidements d'allè-gement (39).

6. Dispositif de fixation selon la revendication 5, caractérisé par le fait que le palier de support d'arbre (52, 59) est constitué d'un demi-palier supérieur (56, 60) et d'un demi-palier inférieur (57, 61) qui peuvent être écartés de l'arbre (48).

7. Dispositif de fixation selon l'une des revendications 1 à 6, caractérisé par le fait que l'arbre (48) est pourvu à ses extrémités de pièces écartables séparées (53) semblables aux pièces de serrage (49) et auxquelles sont associés côté machine des accouplements à cylindre creux (54) ouverts d'un côté.

8. Dispositif de fixation selon la revendication 7, caractérisé par le fait qu'au moins un des accouplements à cylindre creux (54) peut être reculé dans la direction axiale de la longueur d'une zone de serrage (45).

9. Dispositif de fixation selon l'une des revendications 1 à 8, caractérisé par le fait que l'arbre (48) est entraîne aux deux extrémités à vitesse synchrone.

10. Dispositif de fixation selon la revendication 1, caractérisé par le fait qu'à chaque pièce de serrage (5) sont adjoints au moins deux pistons (8).

11. Dispositif de fixation selon une ou plusieurs des caractérisés 1 à 10, caractérisé par le fait que dans les segments de l'arbre (25) ou dans les pièces de guidage (63) sont intégrés deux conducteurs électriques (65, 66) s'étendant chacun près des pièces de serrage (26, 64) et parcourus en sens contraire par le courant, et dont les champs magnétiques (67, 68) agisent sur les pièces de serrage (64) en décromprimant les surfaces de guidage (69) de l'arbre (25) ou les surfaces de guidage des pièces de guidage (63).

## Claims

1. Chucking device for work-pieces 3 with an end-to-end inner boring 2, in particular in computer-controlled machine-tools for metal-cutting, with a central shaft 25, insertable into the inner boring 2 of the work-piece, on the perimeter of which are arranged at least two clamping-pieces 26, held in radial cutouts in the shaft 25, which are each connected tightly to pressure-driven pistons 28, for radial spreading of the clamping-pieces 26, characterised in that the clamping-pieces 26 are formed as linear strips with a rectangular cross-section and arranged in the manner of a parallel key in linear grooves 27 in the shaft 25, in that abutments 12 are provided for the clamping-pieces 26, separated from the pistons 8, 28, for restricting the radial spreading, in that the clamping-pieces 26 are provided with guide-pieces 29, in the form of ring segments, equal in number to the number of clamping-pieces 26 and each inserted flush between two adjacent clamping-pieces 26 and fixable detachably to the perimeter surface of the shaft 25, and in that the guiding-pieces 29 have on their inner surface fitting-projections 30, with corresponding step-bearings 31 on the shaft 25, and in that the shaft 48 has on its length at least two clamping-areas 45, separated from one another, each having a radial group of clamping- and in certain cases guiding-pieces 49, 50, between which a shaft outrigger bearing 52 is arranged, the pistons being arranged in the base of the grooves.

2. Chucking device according to Claim 1, characterised in that the shaft 25 is equipped with several groups of interchangeable clamping-pieces 26, 33 and guiding pieces 29, 34 of different sizes.

3. Chucking device according to Claims 1 or 2, characterised in that the shaft 25 is cylindrical and the guiding-pieces 29 are formed as sections of a hollow cylinder casing.

4. Chucking device according to Claims 1 or 2, characterised in that the shaft 41 has a polygonal profile and that the guiding-pieces 42 are equipped with a polygonal inner surface 43 matching the shaft profile.

5. Chucking device according to Claims 1 to 4, characterised in that the guiding-pieces 36 have weight-reducing cutouts 39.

6. Chucking device according to Claim 5, characterised in that the shaft outrigger-bearing 52, 59 is constructed from an upper 56, 60 and a lower 57, 61 half-bearing, which can be withdrawn from the shaft 48.

7. Chucking device according to Claims 1 to 6, characterised in that the shaft 48 is equipped at its ends with separated spreading-pieces 53, similar to the clamping-pieces 49, equipped on the machine-side with hollow-cylinder couplings 54 open at one side.

8. Chucking device according to Claim 7, characterised in that at least one of the hollow-cylinder couplings 54 can be withdrawn in the axial direction the length of one clamping area 45.

9. Chucking device according to Claims 1 to 8, characterised in that the shaft 48 is driven by synchronised revolutions at both ends.

10. Chucking device according to Claim 1, characterised in that each clamping-piece 5 is provided with at least two pistons 8.

11. Chucking device according to one or more of Claims 1 to 10, characterised in that two electrical conductors 65, 66 carrying current in opposite directions, each running alongside the clamping-pieces 26, 64, are integrated into the segments of the shaft 25, or into the guiding-pieces 63. Their magnetic fields 67, 68 influence the clamping-pieces 64 when the pressure is removed from the guiding-surfaces 69 of the shaft 25 or of the guiding-pieces 63.

Fig.3

Fig.1

Fig.4

Fig.5

Fig.6

Fig.2

Fig.7

Fig.8

Fig.10

Fig.9

Fig. 12

Fig. 11

Fig.13

2

EP 0 186 838 B1

Fig. 14

Fig. 16

Fig. 15

Fig. 18

Fig. 17

3

Fig. 19

Fig. 20